Europäisches Patentamt

European Patent Office

Office européen des brevets

(11) Numéro de publication : **0 049 667
B1**

# (12) FASCICULE DE BREVET EUROPÉEN

(45) Date de publication du fascicule du brevet :
04.07.84

(21) Numéro de dépôt : **81401539.2**

(22) Date de dépôt : **05.10.81**

(51) Int. Cl.³ : **G 21 C   3/32**

(54) **Assemblage combustible de réacteur nucléaire.**

(30) Priorité : **08.10.80 FR 8021499**

(43) Date de publication de la demande :
**14.04.82 Bulletin 82/15**

(45) Mention de la délivrance du brevet :
**04.07.84 Bulletin 84/27**

(84) Etats contractants désignés :
**BE DE FR GB IT SE**

(56) Documents cités :
**GB-A- 1 071 982
LU-A-    39 405
US-A- 3 791 466**

(73) Titulaire : **Framatome
Tour Fiat 1 place de la Coupole
F-92400 Courbevoie (FR)**

(72) Inventeur : **Le Pargneux, Jacques
125 rue Duguesclin
F-69006 Lyon (FR)**

(74) Mandataire : **Le Brusque, Maurice et al
CREUSOT-LOIRE 15 rue Pasquier
F-75383 Paris Cedex 08 (FR)**

Jouve, 18, rue St-Denis, 75001 Paris, France

## Description

L'invention a pour objet un assemblage combustible de réacteur nucléaire et en particulier de réacteur à eau pressurisée.

Dans les réacteurs nucléaires les éléments combustibles sont généralement disposés sous forme d'assemblages qui peuvent être retirés individuellement pour être placés dans une piscine de désactivation.

Chaque assemblage est constitué d'une pluralité d'éléments appelés crayons qui sont disposés verticalement dans un châssis de soutien. Le châssis est constitué par deux pièces d'extrémité appelées embout supérieur et embout inférieur sur lesquelles sont fixées les extrémités d'une pluralité de tubes verticaux se substituant à certains crayons. Les tubes servent par exemple au guidage des barres de contrôle. Entre les embouts supérieurs sont disposées plusieurs grilles entretoises qui prennent appui sur les tubes et qui sont munies d'organes de maintien des éléments combustibles. Chaque pièce d'extrémité comprend un fond plan sur lequel sont ménagées deux séries d'orifices. Les extrémités des tubes s'engagent et sont fixées dans les orifices de la première série alors que la seconde série sert au passage du fluide de refroidissement des éléments combustibles. Un tel assemblage est connu du US-A-3 791 466.

La pièce d'extrémité inférieure prend appui sur les équipements internes inférieurs. Ceux-ci sont limités par la plaque inférieure du cœur qui est munie de pions de centrage s'engageant dans des orifices ménagés sur quatre pieds placés aux angles de la pièce d'extrémité inférieure.

De la même façon la pièce d'extrémité supérieure est également munie dans ses angles d'orifices dans lesquels s'engagent des pions de centrage solidaires de la plaque supérieure du cœur, qui limite les équipements internes supérieurs.

Périodiquement, il est nécessaire de procéder à un rechargement en combustible. A cet effet, on enlève les équipements internes supérieurs pour accéder à l'ensemble des assemblages combustibles. Chaque assemblage peut être retiré en bloc et placé dans un alvéole d'une piscine de désactivation. Dans cette piscine, une machine commandée à distance procède au démontage de l'assemblage combustible. En effet, il est nécessaire de pouvoir accéder aux crayons pour changer ou éliminer certains de ceux-ci reconnus défectueux ou recyclables.

De même la démontabilité permet la réutilisation des pièces d'ossature et parallèlement un stockage plus compact des crayons retirés de l'ossature.

On a déjà proposé diverses dispositions permettant de démonter et de remonter de façon pratique les pièces d'extrémités de l'assemblage de façon à accéder aisément aux crayons. Cette opération, qui doit se faire sous eau puisque les assemblages sont irradiés, doit être aussi simple que possible. Cependant, dans les diverses solutions connues il est généralement nécessaire de monter ou de démonter des petites pièces de préhension délicate et cette opération commandée à distance demande beaucoup de temps et de précision. L'invention a pour objet une nouvelle disposition de l'assemblage combustible permettant d'effectuer facilement les opérations de montage et de démontage en maintenant une tenue mécanique efficace des pièces d'extrémité.

Conformément à l'invention, une plaque interne munie des mêmes séries d'orifices de passage des tubes et de passage du fluide est accolée au fond de chaque pièce d'extrémité et reliée à celui-ci par des moyens de fixation amovibles de façon à former un ensemble ayant les caractéristiques mécaniques exigées du fond et les orifices de passage des tubes ménagés sur la plaque interne ont une forme oblongue et sont munis d'éléments de fixation coopérant avec des éléments correspondants ménagés sur l'extrémité de chaque tube pour la fixation desdits tubes par déplacement transversal de la plaque interne, l'ensemble étant bloqué par la fixation du fond sur la plaque interne.

L'invention va maintenant être décrite en se référant à un mode de réalisation particulier donné à titre d'exemple et représenté sur les dessins annexés.

La figure 1 est une vue générale en élévation d'un assemblage combustible.

La figure 2 est une vue de dessus de la pièce d'extrémité supérieure selon II-II figure 1.

La figure 3 est une vue en coupe transversale selon III-III figure 2.

La figure 4 est une vue de dessous de la pièce d'extrémité inférieure selon IV-IV figure 1.

La figure 5 est une vue en coupe transversale selon V-V figure 4.

Les figures 6 et 7 sont des vues partielles de dessus, respectivement du fond de la pièce d'extrémité supérieure et de la plaque interne correspondante.

La figure 8 est une vue de détail, en coupe axiale, de la fixation de l'extrémité supérieure d'un tube sur la pièce d'extrémité.

La figure 9 est une vue selon IX-IX de la partie représentée figure 8.

La figure 10 est un schéma représentant les forces appliquées sur l'assemblage, en manutention sur la partie gauche et en appui sur la partie droite.

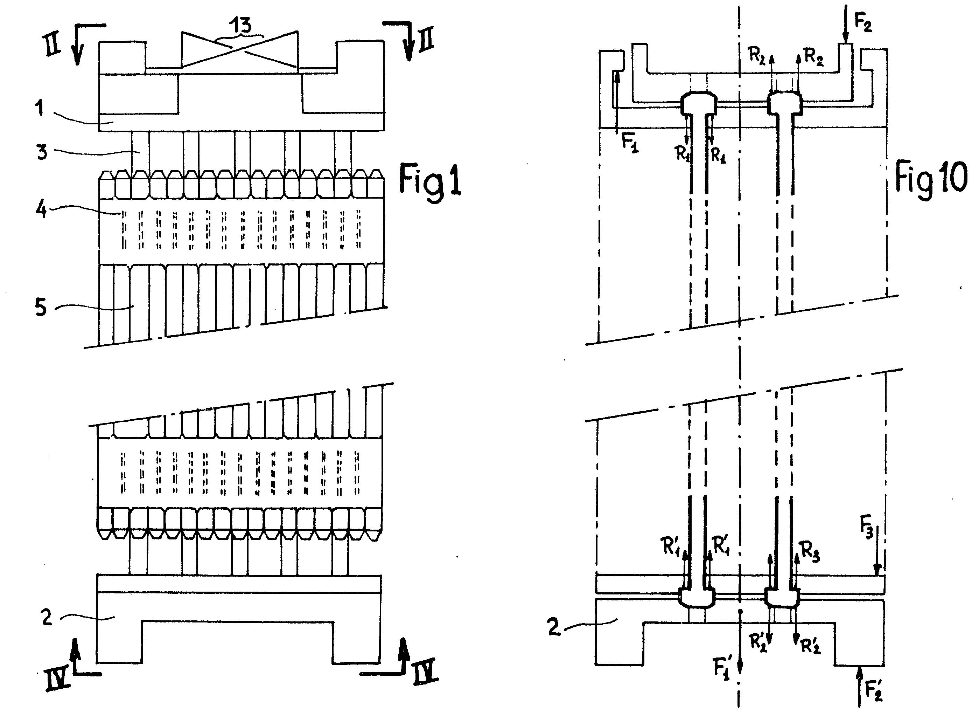

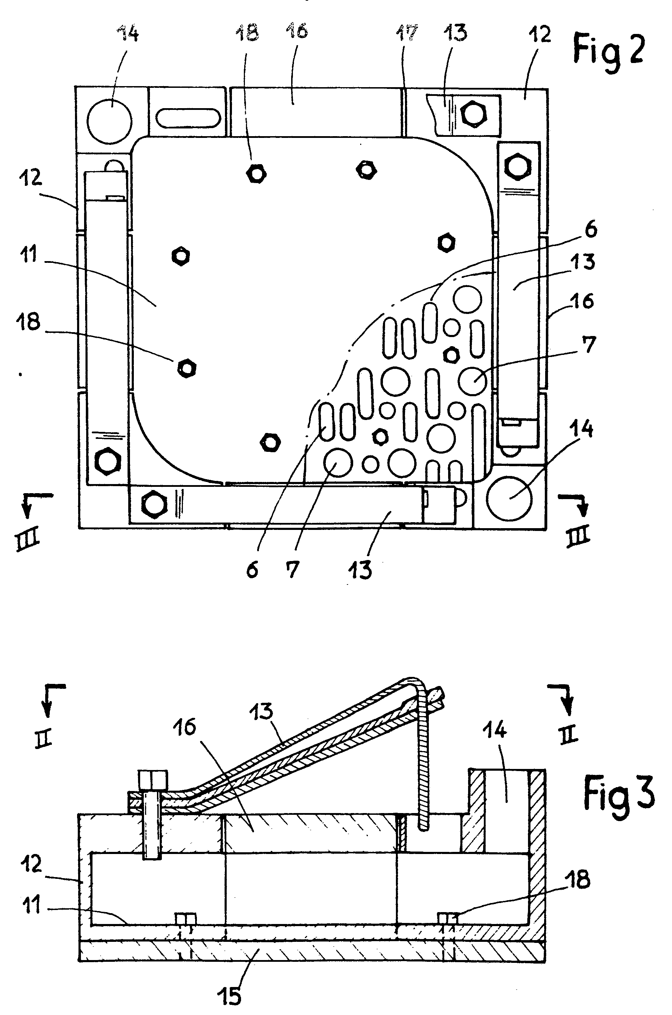

On a représenté sur la figure 1, en perspective, l'ensemble d'un assemblage combustible qui comprend un châssis formant ossature de support constitué par une pièce d'extrémité supérieure 1 et une pièce d'extrémité inférieure 2 reliées entre elles par une pluralité de tubes 3.

Entre les deux pièces d'extrémité sont réparties plusieurs grilles entretoises 4 qui s'appuient sur les tubes 3, et qui servent au maintien des crayons combustibles 5.

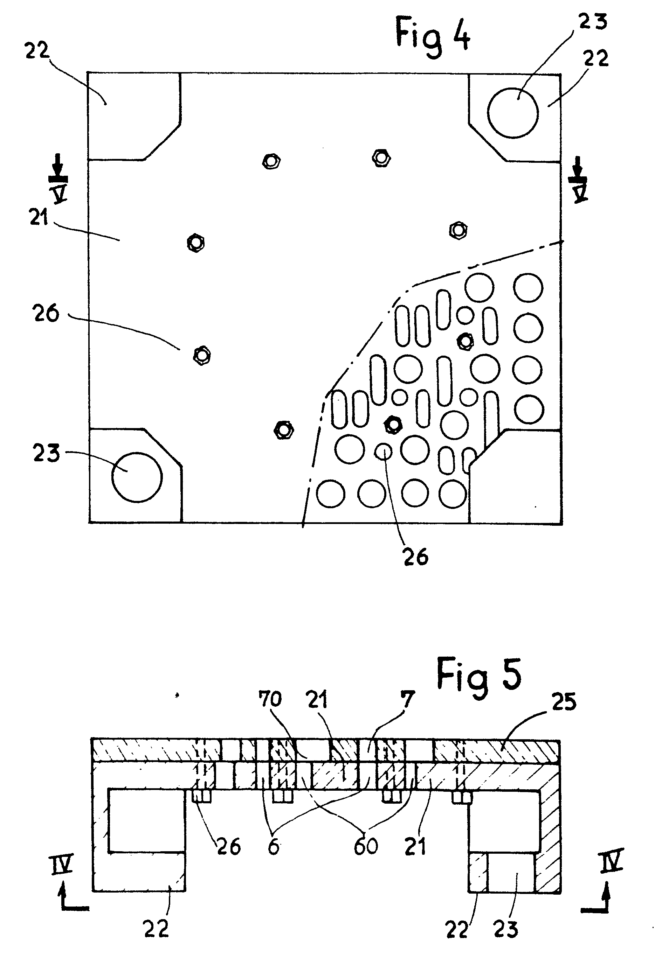

Sur les figures 2 et 3 on a représenté la pièce d'extrémité supérieure 1 qui, de façon classique, comprend un fond plan 11 solidaire d'un cadre carré 12. Sur les côtés du cadre sont fixés des ressorts de maintien 13 et à deux angles opposés en diagonale sont ménagés des logements à axes verticaux 14 dans lesquels viennent se placer les pions de centrage de la plaque supérieure du cœur.

Selon une caractéristique essentielle de l'invention le fond 11 est associé à une plaque interne 15 sur laquelle sont fixées de préférence des pattes 16 qui servent à l'accrochage de l'ensemble et qui passent dans des échancrures 17 ménagées sur le fond 11.

D'autre part, le fond 11 et la plaque 15 sont fixés par des vis 18.

Le fond 11 et la plaque 15 sont munis d'autre part d'orifices respectivement 6 et 60, de passage du fluide de refroidissement et d'orifices 7 et 70 de fixation des extrémités des tubes. Sur la figure 2, on a représenté seulement quelques-uns de ces orifices.

La pièce d'extrémité inférieure 2 représentée sur les figures 4 et 5 se compose de la même façon d'un fond 21 aux quatre angles duquel sont placés des pieds 22 d'appui sur la plaque infé- rieure du cœur. Deux de ces pieds 22 opposés en diagonale sont munis de logements 23 dans lesquels peuvent s'engager des pions de centrage solidaires de la plaque inférieure du cœur.

Comme indiqué plus haut pour la pièce d'extrémité supérieure, le fond 21 est associé à une plaque interne 25 et ils sont munis respectivement des mêmes séries d'orifices 6, 60 de passage du fluide et 7, 70 de fixation des extrémités de tube. D'autre part, le fond 21 et la plaque 25 sont reliés de façon amovible par des vis de fixation 26.

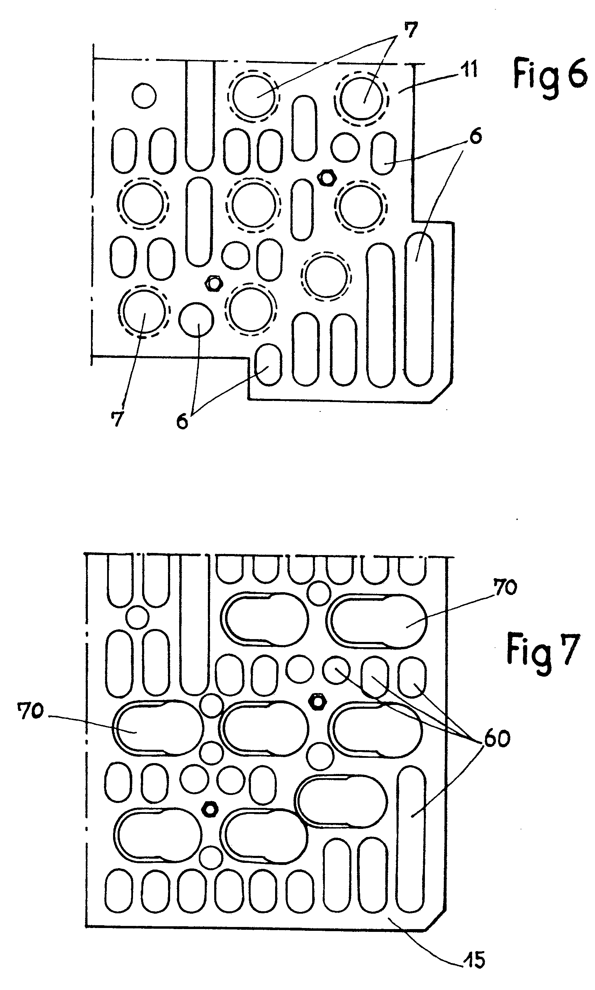

Sur les figures 6 et 7 on a représenté respectivement une partie du fond 11 et de la plaque interne 15 en vue de dessus pour montrer les deux séries d'orifices 6, 60 de passage du fluide de refroidissement et 7, 70 correspondant aux tubes guides.

Les orifices 6 et 60 ont des dimensions choisies pour déterminer une section de passage totale du fluide aussi grande que possible tout en conservant les caractéristiques mécaniques de résistance indispensables.

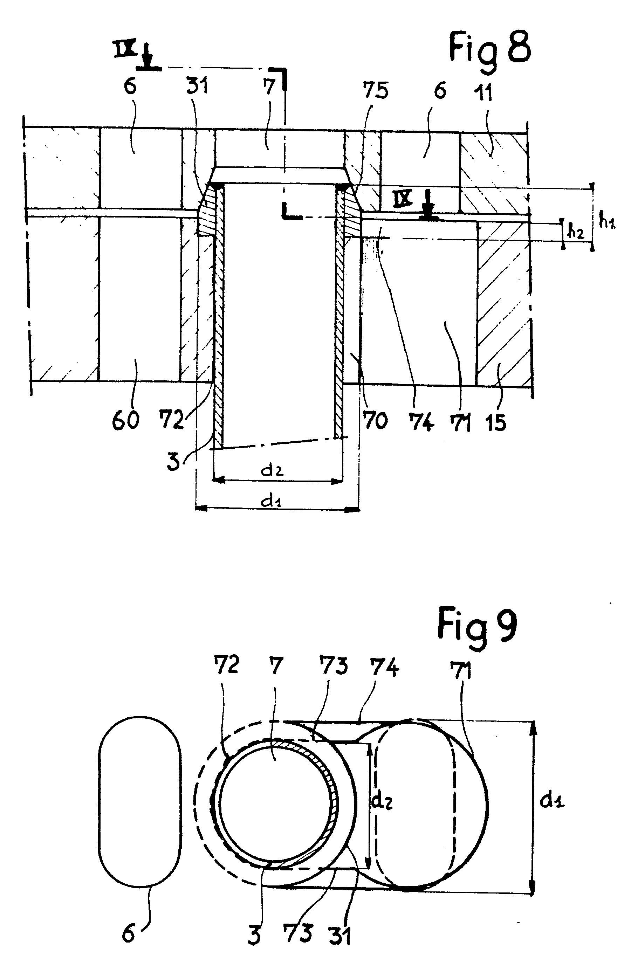

Les orifices 7 ménagés sur le fond 11 ont une section circulaire qui correspond à la section des tubes. En revanche, les orifices 70 correspondants de la plaque interne 15 ont une forme oblongue de façon à permettre une fixation à baïonnette des extrémités de tubes comme on va le voir en se référant aux figures 8 et 9.

Pour cela, chaque tube 3 est muni à son extrémité d'une bague 31 et l'orifice 70 .correspondant de la plaque interne 15 est constitué par la réunion de deux parties, une partie cylindrique 71 de diamètre $d_1$ égal au diamètre externe de la bague 31, et une partie demi-cylindrique 72 déca- lée latéralement, de diamètre $d_2$ égal au diamètre externe du tube 3, et reliée à la partie 71 par deux parois parallèles 73 écartées d'une distance égale audit diamètre $d_2$ du tube 3.

Cependant, sur la face de la plaque 15 en regard du fond 11 est ménagé un lamage ou une gorge 74 de largeur égale au diamètre $d_1$ de la bague 31.

De la sorte lorsque l'on place la plaque 15 sur les extrémités des tubes 3, on peut enfiler les tubes dans les parties 71 des orifices 70, jusqu'à ce que les bagues 31 passent au-dessus des lamages 74. On peut ensuite décaler latéralement la plaque 15, chaque tube 3 venant alors se placer dans l'axe de la partie 72 et sa bague 31 s'engageant dans le lamage 74 correspondant.

Les tubes 3 étant ainsi tous calés en même temps dans le fond des orifices 72 par le décalage latéral de la plaque 15, on met en place la pièce d'extrémité 1 dont le fond 11 vient s'appliquer sur la plaque interne 15. De préférence, la bague 31 de chaque tube 3 a une hauteur $h_1$ plus élevée que la profondeur $h_2$ du lamage 74 et la partie supérieure de chaque bague dépassant le niveau de la plaque 15 a une section tronconique, et peut s'engager dans un élargissement 75 de même section ménagé sur le pourtour de chaque orifice 7 correspondant. Chaque tube est ainsi bloqué axialement et radialement lorsque l'on a fixé la plaque 15 sur le fond 11 au moyen des vis 18.

La fixation des tubes sur la pièce d'extrémité inférieure 2 peut se faire de façon tout à fait analogue.

D'autre part, comme on le voit sur la figure 8, lorsque les tubes 3 sont en place, les parties 71 des orifices 70 peuvent servir au passage du fluide dans les zones où ils coïncident avec des orifices 6 de la plaque 11.

Les vis 18 et 26 ont pour rôle d'éviter le glissement relatif de la plaque interne et du fond mais ne subissent pas d'efforts de traction car, comme le représente la figure 10, toutes les forces parallèles à l'axe de l'assemblage sont directement transmises par les tubes guides 3 et réparties sur les zones qui assurent la réaction, sans effort sur les vis de liaison 18, 26. Ainsi, en manutention, l'assemblage combustible est suspendu par les parties 16 solidaires de la plaque 15. Dans ce cas, les tubes 3 sont accrochés à la plaque 15 par les bagues 31 qui s'appuient sur les lamages 74 et ils supportent eux-même tout le poids de l'assemblage. De même, la fixation sur la pièce d'extrémité inférieure étant inversée, en manutention les bagues 31 des tubes 3 supportent la plaque interne 25 sur laquelle est fixé le fond 21 par les vis 26. Celles-ci ne supportant donc que le poids de la pièce d'extrémité inférieure 2.

Lorsque l'assemblage est en appui supérieur ou inférieur, les extrémités des tubes 3 s'appuient sur le fond 11 ou, à la partie inférieure, sur le fond 21 par l'intermédiaire des bagues 31 engagées dans les parties 75 des orifices 7. De la sorte, les efforts axiaux d'appui sont transmis directement par les bagues 31 et répartis sur les fonds 11 et 21 qui assurent la réaction.

Ceci est illustré par la figure 10 qui représente les forces appliquées, en manutention sur sa partie gauche et en appui sur sa partie droite.

Aux efforts de suspension F1 appliqués, en manutention sur les parties d'accrochage 16 correspondent des réactions R1 des bagues 31 réparties sur la plaque supérieure 15 et R'1 réparties sur la plaque inférieure 25 qui supporte le poids F'1 de l'embout inférieur 2.

Inversement, l'effort d'appui F2 de la plaque supérieure du cœur sur l'embout supérieur 1 correspond à des réactions R2 et R'2 des tubes respectivement sur les fonds 11 de l'embout supérieur 1 et 21 de l'embout inférieur 2 sur lequel s'exerce la réaction F'2 du sol ou de la plaque inférieure du cœur.

De même, un effort accidentel F3 dû, par exemple, à un choc sur l'embout inférieur 2 est encaissé par les tubes 3 par l'intermédiaire des bagues inférieures qui supportent une réaction correspondante R3.

Bien entendu, l'invention ne se limite pas aux détails du mode de réalisation qui a été décrit, mais elle englobe au contraire toutes les variantes qui n'en différeraient que par l'emploi de moyens équivalents.

Ainsi la bague 31 de fixation du tube 3 peut être soit rapportée sur le tube par soudage ou sertissage soit formée directement par expansion torique ou conique.

## Revendications

1. Assemblage combustible de réacteur nucléaire comportant une pluralité d'éléments combustibles disposés verticalement dans un châssis de soutien comportant deux pièces d'extrémités, respectivement supérieure (1) et inférieure (2), sur lesquelles sont fixées les extrémités d'une pluralité de tubes verticaux (3) le long desquels sont disposées une pluralité de grilles (4) de maintien des éléments combustibles (5), chaque pièce d'extrémité (1, 2) comprenant un fond plan (11, 21) sur lequel sont ménagés une première série d'orifices (7) dans lesquels s'engagent et sont fixées les extrémités des tubes (3) et une seconde série d'orifices (6) de passage du fluide de refroidissement des éléments combustibles (5) caractérisé par le fait qu'une plaque interne (15, 25), munie des mêmes séries d'orifices (70) d'engagement des tubes (3) et (60) de passage du fluide est accolée au fond (11, 21), de chaque pièce d'extrémité (1, 2) et reliée à celui-ci par des moyens de fixation amovibles (18, 26) de façon à former un ensemble et par le fait que les orifices (70) d'engagement des tubes (3) ménagés sur la plaque interne (15, 25) ont une section oblongue et sont munis d'éléments de fixation (74) coopérant avec des éléments correspondant (31) ménagés sur l'extrémité de chaque tube (3) pour la fixation de ces tubes par déplacement transversal de la plaque interne, l'ensemble étant bloqué ensuite par la fixation du fond sur la plaque interne.

2. Assemblage combustible selon la revendication 1, caractérisé par le fait que chaque tube (3) est muni à chaque extrémité d'une partie (31) à section élargie et que chaque orifice oblong correspondant (70) de la plaque interne (15, 25) est constitué par la réunion de deux parties décalées l'une (71) de largeur d1 égale à celle de la partie élargie (31) du tube (3) et l'autre (72) de largeur d2 égale à celle du tube (3) la paroi interne de cette dernière étant munie d'une gorge (74) dans laquelle peut s'engager la partie élargie (31) du tube par décalage latéral de la plaque interne (15, 25) par rapport au tube (3), ladite partie élargie (31) du tube (3) et ladite gorge 74 constituant les éléments de fixation du tube 3 sur la plaque (15, 25).

3. Assemblage combustible selon la revendication 2, caractérisé par le fait que la gorge (74) dans laquelle peut s'engager la partie élargie (31) de chaque tube (3) est constituée par un lamage ménagé sur la face de la plaque (15, 25) accolée au fond (1, 2) et que ladite partie élargie (31) a une hauteur h1 supérieure à la profondeur h2 dudit lamage (74) et s'engage dans un élargissement de section correspondante ménagé sur le pourtour de l'orifice (7) correspondant du fond (1, 2) lors de la mise en place de ce dernier.

4. Assemblage combustible selon la revendication 3, caractérisé par le fait que, en appui, les efforts axiaux sont transmis directement par les parties élargies (31) des tubes (3) et repartis sur les fonds (11) et (21) qui assurent la réaction.

5. Assemblage combustible selon la revendication 3, caractérisé par le fait que, en manutention, les efforts axiaux de suspension sont transmis directement par les parties élargies (31) des tubes (3) et répartis sur les plaques internes (15, 25) qui assurent la réaction, la plaque supérieure (11) étant munie de moyens (16) d'accrochage de l'ensemble de l'assemblage.

## Claims

1. A nuclear reactor fuel assembly comprising a plurality of fuel elements arranged vertically in a support structure comprising two end parts, upper (1) and lower (2) respectively, on which are fixed the ends of a plurality of vertical tubes (3) along which is arranged a plurality of grids (4) for holding the fuel elements (5), each end part (1, 2) comprising a flat bottom (11, 21) on which is arranged a first series of openings (7) in which the ends of the tubes (3) engage and are fixed and a second series of openings (6) for passage of the fluid cooling the fuel elements (5), characterised in that an internal plate (15, 25), provided with the same series of openings (70) for engaging the tubes (3) and (60) for passage of the fluid, is mounted on the bottom (11, 21) of each end part (1, 2) and joined to the latter by removable means of fixing (18, 26) so as to form a unit, and in that the openings (70) for engaging the tubes (3) arranged on the internal plate (15, 25) have an oblong cross-section and are provided with fixing components (74) cooperating with corresponding

7  0 049 667  8

components (31) arranged on the end of each tube (3) for fixing these tubes by a transversal movement of the internal plate, the unit being subsequently locked by fixing the bottom on the internal plate.

2. A fuel assembly according to claim 1, characterised in that each tube (3) is provided at each end with a part (31) having a widened cross-section and in that each corresponding oblong opening (70) of the internal plate (15, 25) consists of the combination of two offset parts, one (71) of width d1 which is equal to that of the widened part (31) of the tube (3) and the other (72) of width d2 which is equal to that of the tube (3), the inner wall of the latter being provided with a groove (74) in which the widened part (31) of the tube can engage by sideways offsetting of the internal plate (15, 25) with respect to the tube (3), the said widened part (31) of the tube (3) and the said groove (74) forming the components fixing the tube (3) to the plate (15, 25).

3. A fuel assembly according to claim 2, characterised in that the groove (74) in which the widened part (31) of each tube (3) can engage consists of a spot facing arranged on the face of the plate (15, 25) mounted on the bottom (1, 2) and in that the said widened part (31) has a height h1 greater than the depth h2 of the said spot facing (74) and engages in a widening of a corresponding cross-section arranged on the periphery of the corresponding opening (7) of the bottom (1, 2) when the latter is positioned.

4. A fuel assembly according to claim 3, characterised in that, at rest, the axial loads are transmitted directly by the widened parts (31) of the tubes (3) and distributed on the bottoms (11 and 21) which provide the reaction.

5. A fuel assembly according to claim 3, characterised in that, during handling, the axial suspension loads are transmitted directly by the widened parts (31) of the tubes (3) and distributed on the internal plates (15, 25) which provide the reaction, the upper plate (11) being provided with means (16) for hanging the entire assembly.

**Ansprüche**

1. Kernreaktor-Brennstoffelementbündel mit mehreren Brennstoffelementen, die senkrecht in einem Stützrahmen mit zwei Endstücken — jeweils ein oberes (1) und ein unteres (2) — angeordnet sind, an denen die Enden mehrerer Senkrechtrohre (3) befestigt sind, die über ihre Länge mehrere Gitter (4) zum Halten der Brennstoffelemente (5) aufweisen, wobei jedes Endstück (1, 2) einen Planboden (11, 21) umfaßt mit einer ersten darin angeordneten Reihe Öffnungen (7) zur Aufnahme und Befestigung der Enden der Rohre (3) sowie einer zweiten Reihe Öffnungen (6) zum Durchlauf des Kühlmediums der Brennstoffelemente (5), dadurch gekennzeichnet, daß eine Innenplatte (15, 25) mit den selben Reihen Öffnungen (70) zur Aufnahme der Rohre (3) und (60) für den Mediumdurchfluß an dem Boden (11, 21) des jeweiligen Endstückes (1, 2) angebaut und zur Bildung einer Einheit mit diesem über abnehmbare Befestigungsmittel (18, 26) verbunden ist, und daß die zur Aufnahme der Rohre (3) auf der Innenplatte (15, 25) vorgesehenen Öffnungen (70) einen länglichen Querschnitt aufweisen und mit Befestigungsteile (74) versehen sind, die mit den entsprechenden am Ende des jeweiligen Rohres (3) vorgesehenen Teile (31) zur Befestigung dieser Rohre durch Querverfahren der Innenplatte (3) zusammenwirken, wobei die Einheit durch die Befestigung des Bodens auf der Innenplatte dann blockiert wird.

2. Brennstoffelementbündel nach Anspruch 1, dadurch gekennzeichnet, daß jedes Rohr (3) an jedem Ende ein Teil (31) mit einem erweiterten Querschnitt aufweist, und daß jede entsprechende längliche Öffnung (70) der Innenplatte (15, 25) aus der Verbindung zwei versetzter Teile — das eine (71) mit der Breite d1 gleich Breite des erweiterten Teils (31) des Rohrs (3) und das andere (72) mit der Breite d2 gleich Breite des Rohrs (3) — besteht, wobei die Innenwand des letzteren eine Rille (74) aufweist zur Aufnahme des erweiterten Teils (31) des Rohrs durch seitliches Versetzen der Innenplatte (15, 25) gegenüber dem Rohr (3), und wobei dieses erweiterte Teil (31) des Rohrs (3) und die Rille (4) die Befestigungsteile des Rohrs (3) auf der Platte (15, 25) bilden.

3. Brennstoffelementbündel nach Anspruch 2, dadurch gekennzeichnet, daß die Rille (74) zur evtl. Aufnahme des erweiterten Teils (31) von jedem Rohr (3) aus einer Senkung auf der Oberfläche der an dem Boden (1, 2) angebauten Platte (15, 25) besteht, und daß das erweiterte Teil (31) eine Höhe h1 grösser als die Tiefe h2 dieser Senkung (74) aufweist und in eine Erweiterung mit entsprechendem Querschnitt in dem Umfang der entsprechenden Öffnung (7) des Bodens (1, 2) bei der Anordnung des letzteren eingeführt wird.

4. Brennstoffelementbündel nach Anspruch 3, dadurch gekennzeichnet, daß bei der Abstützung die Axialkräfte direkt durch die erweiterten Teile (31) der Rohre (3) übertragen und auf die die Gegenwirkung gewährleistenden Böden (11) und (21) verteilt werden.

5. Brennstoffelementbündel nach Anspruch 3, dadurch gekennzeichnet, daß beim Transport die axialen Aufhängekräfte direkt durch die erweiterten Teile (31) der Rohre (3) übertragen und auf die die Gegenwirkung gewährleistenden Innenplatten (15, 25) verteilt werden, wobei die obere Platte (11) Einhängemittel (16) für das gesamte Brennstoffelementbündel aufweist.

Fig 10

Fig 1

Fig 2

Fig 3

2

Fig 4

Fig 5

Fig 6

Fig 7

Fig 8

Fig 9